# EUROPÄISCHE PATENTSCHRIFT

(11) **EP 2 647 805 B1**
(45) Veröffentlichungstag und Bekanntmachung des Hinweises auf die Patenterteilung: **04.12.2019**
(21) Anmeldenummer: 13159751.0
(22) Anmeldetag: 18.03.2013
(51) Int. Cl.: F01P 7/14

(54) **THERMOSTATVENTIL FÜR EINE BRENNKRAFTMASCHINE**
Thermostatic valve for a combustion engine
Vanne thermostatique pour un moteur à combustion interne

(30) Priorität: 04.04.2012 DE 102012205596
(43) Veröffentlichungstag der Anmeldung: 09.10.2013
(73) Patentinhaber: MAHLE Behr Kornwestheim GmbH, 70806 Kornwestheim (DE)
(72) Erfinder: Willers, Eike, Dr, 70469 Stuttgart (DE); Röser, Petra, 71332 Waiblingen (DE)
(74) Vertreter: BRP Renaud & Partner mbB Rechtsanwälte Patentanwälte Steuerberater

(56) Entgegenhaltungen:
- EP-A2- 1 108 867
- WO-A2-02/37001
- DE-A1- 4 324 749
- DE-A1- 10 127 711
- DE-A1- 10 304 837
- DE-A1-102006 038 213
- JP-A- 2002 106 347
- US-A- 3 520 513

## Beschreibung

Die vorliegende Erfindung betrifft ein Thermostatventil für eine Brennkraftmaschine mit einem Gehäuse, das zumindest drei Anschlüsse aufweist, nämlich einen Maschinenanschluss in Verbindung mit einem Maschinenkühlsystem, einen Kühleranschluss zur Verbindung mit einem Kühler und einem Bypass-Anschluss zur Verbindung mit einem Bypass gemäß dem Oberbegriff des Anspruchs 1.

Aus der DE 10 2006 038 213 A1 ist ein gattungsgemäßes Thermostatventil bekannt, das zumindest drei Anschlüsse aufweist, nämlich einen Maschinenanschluss zur Verbindung mit einem Maschinenkühlsystem, einem Kühleranschluss zur Verbindung mit einem Kühler und einem Bypass-Anschluss zur Verbindung mit einem Bypass sowie mit einem hohlen kugelförmigen Ventilelement, das um eine Drehachse im Gehäuse zwischen zwei Endstellungen drehbar gelagert ist. Dieses Ventilelement besitzt zumindest zwei Öffnungen, von denen eine ständig mit dem Maschinenanschluss in Verbindung steht und die anderer mit ihrer Achse in einer Ebene liegt, die auf die Drehachse im Wesentlichen senkrecht gerichtet ist. Zusätzlich vorgesehen ist ein von einem Aktuator gesteuerter Antrieb für das Ventilelement, wobei im Bereich des Kühleranschlusses eine an die Kugelform angepasste Dichtungsanordnung vorgesehen ist. Diese Dichtungsanordnung besitzt einen Gleitring aus gleitfähigem Kunststoff, der von einem elastomeren Dichtring gegen das Ventilelement vorgespannt ist.

Aus der EP 1 108 867 A1 ist ein Thermostatventil bekannt, das drei Anschlüsse sowie ein hohles und kugelförmiges Ventilelement aufweist.

Die DE 103 04 837 A1 zeigt ein Exzenterventil zur Steuerung von Volumenströmen in einem Kraftfahrzeug, bei dem eine Drehachse eines scheibenförmigen Ventilkörpers exzentrisch durch ein Ventilgehäuse verläuft.

Die vorliegende Erfindung beschäftigt sich mit dem Problem, für ein Thermostatventil der gattungsgemäßen Art eine verbesserte Ausführungsform anzugeben, die sich insbesondere durch eine alternative und verbesserte Ausführungsform eines Ventilelements auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, ein Ventilelement für ein Thermostatventil einer Brennkraftmaschine kugelsegment- oder kugelschalenförmig auszubilden und mit ausschließlich einer einzigen Öffnung zu versehen. Ein derartig geformtes und ausgebildetes Ventilelement lässt sich im Vergleich zu bisherigen Ventilelementen für Kugelventile deutlich einfacher herstellen, insbesondere sogar als Kunststoffspritzgussteil, wodurch das erfindungsgemäße Thermostatventil insgesamt kostengünstiger produziert werden kann. Das Thermostatventil besitzt darüber hinaus ein Gehäuse mit mindestens drei Anschlüssen, nämlich einem Maschinenanschluss zur Verbindung mit einem Maschinenkühlsystem, einem Kühleranschluss zur Verbindung mit einem Kühler und einem Bypass-Anschluss zur Verbindung mit einem dem Kühler umgehenden Bypass. Das Ventilelement selbst ist um eine Drehachse im Gehäuse zwischen zwei Endstellungen drehbar gelagert, wobei selbstverständlich beliebige Zwischenstellungen denkbar sind, in welchem eine individuelle Stromaufteilung zwischen den mindestens drei Anschlüssen erfolgt. Im Vergleich zu aus dem Stand der Technik bekannten Thermostatventilen und insbesondere im Vergleich zu aus dem Stand der Technik bekannten Ventilelementen, stellt das erfindungsgemäße Ventilelement eine revolutionäre Neuerung dar, die nicht nur kostengünstig herstellbar ist, sondern darüber hinaus eine Vielzahl an unterschiedlichen Schaltstellungen des Thermostatventils erlaubt und damit eine Vielzahl unterschiedlicher Strömungsflüsse steuern kann. Selbstverständlich kann dabei das erfindungsgemäße Ventilelement auch in allen Arten von gängigen Ventilen und nicht nur in Thermostatventilen eingesetzt werden, so dass der Begriff "Thermostatventil" stellvertretend für ein "Ventil" verwendet wird.

Erfindungsgemäß ist eine an die Kugelform angepasste Dichtungsanordnung vorgesehen, die einen Gleitring aus gleitfähigem Kunststoff, insbesondere aus Polytetraflourethylen, aufweist, der von einem elastomeren Dichtring gegen das Ventilelement vorgespannt ist.

Derartige Gleitringe aus gleitfähigem Kunststoff liegen in der einen Endstellung dicht an einer Dichtungsfläche, das heißt an einer äußeren Mantelfläche, des kugelschalenförmigen Ventilelements an und bewirken damit die Dichtwirkung zum Ventilelement. Aufgrund der besonderen, erfindungsgemäßen Ausführungsform des Ventilelements mit ausschließlich einer einzigen Öffnung kann zusätzlich eine Halteeinrichtung zur Halterung des Gleitrings vorgesehen sein, die den Gleitring an zumindest zwei Stellen hält. Hierdurch soll gewährleistet werden, dass es bei einem Verdrehen des Ventilelements nicht zu einem Verkanten desselben mit dem Gleitring kommt, sondern stets ein gleitender Kontakt zwischen dem Gleitring und dem Ventilelement gegeben ist und sich das Thermostatventil leicht öffnen und schließen lässt. Eine derartige Halteeinrichtung kann beispielsweise auch als Haltering ausgebildet sein, der im Gehäuse entweder partiell, das heißt abschnittsweise an bestimmten Haltepunkten oder aber voll umfänglich in Bezug auf den Dichtungsumfang gehalten ist, beispielsweise eingeclipst, angeschweißt, angeklebt oder angespritzt wird. Hierdurch kann insbesondere ein unbeabsichtigtes sich lösen des Gleitrings sowie eine unbeabsichtigte Verformung desselben bei starken Strömungsgeschwindigkeiten zuverlässig vermieden werden.

Zweckmäßig weist das Ventilelement an zumindest einer Stelle eine Abflachung in der Art einer Sammeltasche auf. Eine derartige Abflachung, die insbesondere innerhalb eines Dichtungsbereichs des Ventilelements angeordnet ist, ermöglicht ein Sammeln von Festkörpern, beispielsweise Sandkörnern, die dann bereits bei einem geringen Öffnen des Ventilelements aus der Abflachung ausgespült und ausgetragen werden können, wodurch eine Einlagerung derartiger, beispielsweise abrasiver Sandkörner, unter dem Gleitring und damit eine langfristige Beschädigung desselben zuverlässig verhindert werden kann. Derartige Abflachungen erhöhen somit die Lebensdauer des erfindungsgemäßen Thermostatventils. Zudem kann durch derartige Abflachungen ein geringerer Druckverlust bei Zwischenstellungen erreicht werden, da ein Parallelpfad aufgebaut wird, was auch ein schnelleres Öffnen der Thermostatventils bewirkt, da bei einer identischen Öffnungsstellung ein durch die Abflachungen größerer Durchtrittsquerschnitt gegeben ist.

In einer weiteren besonderen Ausführungsform weist das Ventilelement an zumindest einer Stelle eine Abflachung oder Sammeltasche auf, die durch einen Führungssteg, die Abflachung oder Sammeltasche in mindestens zwei Bereiche unterteilt und somit beim Öffnen des Ventilelements eine gezielte Ab- bzw. Durchströmung bewirkt, beispielsweise zum Zwecke der besseren Durchmischung oder Erreichung geringerer Druckverluste.

Gemäß einer besonderen Ausführungsform des erfindungsgemäßen Ventilelement besitzt dieses somit ausschließlich noch im Bereich seines Dichtsitzes, also beispielsweise im Bereich einer Kontaktfläche zum Gleitring, eine Kugelform, wogegen im restlichen Kugelsegment Abflachungen, Beulen oder ähnliches vorgesehen sind. Hierdurch ist nicht nur die Einstellung des Strömungsquerschnitts und ein schnelles Öffnen des Thermostatventils möglich, sondern der Gleitring wird zusätzlich nur noch von einer vergleichsweise geringen Fläche des Ventilelements beim Öffnen und Schließen überstrichen, wodurch dessen Verschleiß und auch die Reibung deutlich reduziert werden können, so dass sich das erfindungsgemäße Thermostatventil vergleichsweise einfach Öffnen und Schließen lässt. Derartige Abweichungen von der reinen Kugelform können darüber hinaus als Vorsteuerung, z.B. bei einem Austrittsventil das das vom Motor austretende Kühlmittel zwischen dem Kühler und einem Bypass aufteilt, genutzt werden, wobei dann das Ventilelement auf der einen Seite zurückgenommen ist, so dass ein definierter Spalt beim Öffnen des Ventilelements entsteht, wobei die kugelsegmentartige Ausbildung auf der anderen Seite des Dichtbereichs weiter geführt ist, so dass dort das Ventilelement länger mit dem Gleitring dichtend in Kontakt steht. Hierdurch kann eine feinere Steuerung erreicht werden.

Zweckmäßig weist das Ventilelement zumindest ein Zungenelement zur Durchflusssteuerung beispielsweise eines Nebenkanals auf. Mittels eines oder mehrerer derartiger Zungenelemente können somit weitere Kanäle, beispielsweise Sekundär- oder Nebenkanäle gesteuert werden.

Erfindungsgemäß ist ein das Ventilelement bewegender Kniehebelmechanismus als Hebelmechanismus vorgesehen, über den das Ventilelement ausschließlich in seiner dichtenden Endlage am Gleitring anliegt, wogegen es bei einem Öffnen oder Schließen zunächst vom Gleitring abhebt bzw. auf diesen aufgesetzt wird. Ein derartiger Hebelmechanismus bewirkt dabei eine dichtende Anlage des Ventilelements am Gleitring in der Schließstellung und ein vergleichsweise leichtes Öffnen und Schließen des Ventilelements, da dieses beim Öffnen und Schließen nicht mehr mit dem Gleitring in Kontakt steht und somit nicht die dabei auftretende Reibung zwischen Ventilelement und Gleitring überwunden werden muss. Ein derartiger Hebelmechanismus verringert dabei jedoch nicht nur die Stellkräfte zum Öffnen und Schließen des Thermostatventils, sondern erhöht auch die Langlebigkeit des erfindungsgemäßen Thermostatventils, da der Gleitring und damit die Dichtung insbesondere durch einen Reibungskontakt beim Öffnen und Schließen des Ventilelements stark beansprucht werden und dieser Reibungskontakt nunmehr durch den erfindungsgemäßen Hebelmechanismus eliminiert werden kann.

Bei einer weiteren vorteilhaften Ausführungsform der erfindungsgemäßen Lösung ist am Ventilelement und/oder am Gehäuse zumindest ein Leitelement zur Durchmischung des durch das Thermostatventil fließenden Fluids oder zur gezielten Strömungslenkung vorgesehen. Ein derartiges Leitelement kann beispielsweise in der Art einer Leitkontur oder eines Leitbleches ausgebildet sein und insbesondere beispielsweise einem temperaturabhängigen Aktuator zum Verdrehen des Ventilelements eine gezielte Strömung zuleiten, wobei dieser Aktuator beispielsweise als Wachsdehnelement ausgebildet sein kann. Derartige Leitelemente können selbstverständlich als integraler Bestandteil am Ventilelement oder am Gehäuse ausgebildet sein.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch
- Fig. 1: ein erfindungsgemäßes Thermostatventil für eine im Übrigen nicht gezeigte Brennkraftmaschine mit einem Ventilelement in geöffneter Stellung,
- Fig. 2: eine Schnittdarstellung im Bereich einer Dichtungsanordnung,
- Fig. 3: eine Schrägansicht auf das erfindungsgemäße Ventilelement samt zugehöriger Dichtungsanordnung,
- Fig. 4: ein erfindungsgemäßes Thermostatventil in verschiedenen Ansichten und Schnitten mit einem abgeflachten Ventilelement und kugelsegmentförmiger Dichtung,
- Fig. 5: ein erfindungsgemäßes Thermostatventil in verschiedenen Ansichten und Schnitten mit Strömungsvertiefungen im Ventilelement,
- Fig. 6: ein erfindungsgemäßes Thermostatventil in verschiedenen Ansichten und Schnitten mit Taschen für die Strömung und mit einer Führung für das Ventilelement,
- Fig. 7: eine Darstellung wie in Fig. 7, jedoch mit anders ausgerichteten Strömungsvertiefungen,
- Fig. 8: eine Darstellung wie in Fig. 8, jedoch mit anders ausgerichteten Taschen,
- Fig. 9: ein erfindungsgemäßes Thermostatventil in verschiedenen Ansichten und Schnitten mit einem Ventilelement mit zwei Zungenelementen,
- Fig. 10: eine Darstellung wie in Fig. 9, jedoch mit anderen Zungenelementen,
- Fig. 11: eine Darstellung wie in Fig. 9, jedoch mit anderen Zungenelementen,
- Fig. 12: ein erfindungsgemäßes Thermostatventil in verschiedenen Ansichten und Schnitten mit einem Ventilelement mit Leitstrukturen an der Innenseite,
- Fig. 13: ein erfindungsgemäßes Thermostatventil in verschiedenen Ansichten und Schnitten mit einem Ventilelement mit Fasen,
- Fig. 14: ein erfindungsgemäßes Thermostatventil in verschiedenen Ansichten und Schnitten mit einem exzentrisch gelagerten Ventilelement.

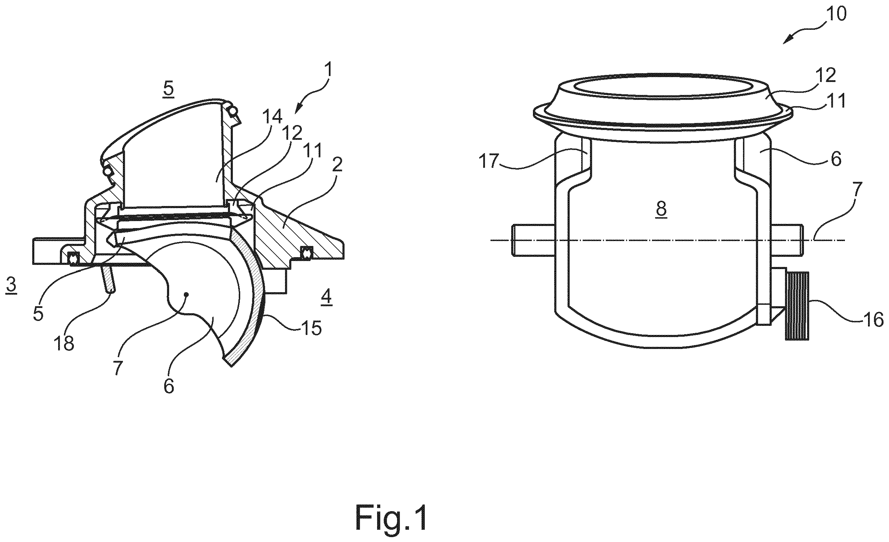

Entsprechend den Fig. 1 bis 14 weist ein erfindungsgemäßes Thermostatventil 1 für eine im Übrigen nicht gezeigte Brennkraftmaschine ein Gehäuse 2 auf, welches zumindest drei Anschlüsse besitzt, nämlich einen Maschinenanschluss 3 zur Verbindung mit einem Maschinenkühlsystem, einen Kühleranschluss 5 zur Verbindung mit einem nicht dargestellten Kühler und einen Bypass-Anschluss 4 zur Verbindung mit einem den Kühler umgehenden Bypass. Zusätzlich besitzt das erfindungsgemäße Thermostatventil 1 ein hohles, kugelförmiges Ventilelement 6, das um eine Drehachse 7 im Gehäuse 2 zwischen zwei Endstellungen drehbar gelagert ist. Erfindungsgemäß ist nun das Ventilelement 6 kugelsegment- bzw. kugelschalenförmig ausgebildet und weist ausschließlich eine einzige Öffnung 8 auf. Aufgrund dieser speziellen erfindungsgemäßen Ausgestaltung des Ventilelements 6 kann dieses fertigungstechnisch vergleichsweise einfach hergestellt werden, insbesondere sogar als einstückiges Kunststoffspritzgussteil, wodurch nicht nur das erfindungsgemäße Ventilelement 6, mittels deutlich kostengünstiger herzustellendere Spritzgusswerkzeuge, sondern zusammen mit diesem auch das erfindungsgemäße Thermostatventil 1 vergleichsweise einfach und kostengünstig hergestellt werden kann.

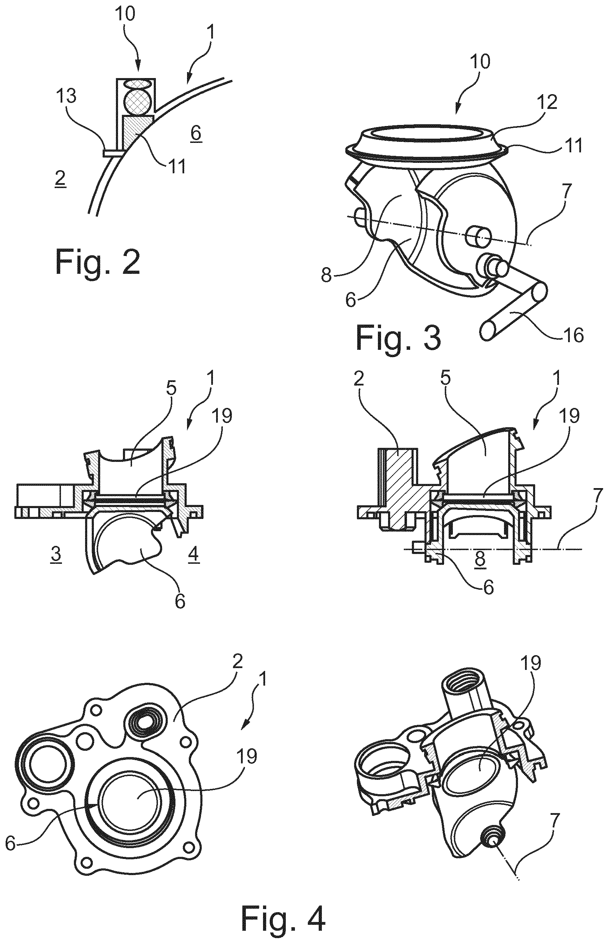

Zusätzlich vorgesehen ist eine an die Kugelform des Ventilelements 6 angepasste Dichtungsanordnung 10, die einen Gleitring 11 aus gleitfähigem Kunststoff, insbesondere aus Polytetrafluorethylen aufweist, der von zumindest einem elastomeren Dichtring 12 gegen das Ventilelement 6 vorgespannt ist. Zum Halten des Gleitrings 11 kann insbesondere eine Halteeinrichtung 13 (vgl. Fig. 2) vorgesehen sein, die beispielsweise als Haltering ausgebildet ist, den Gleitring 11 jedoch an zumindest zwei Stellen zuverlässig hält und damit ein Abheben desselben bzw. Verkanten desselben insbesondere bei hohen Strömungsgeschwindigkeiten zuverlässig verhindert. Die Halteeinrichtung 13 fixiert dabei die Dichtungsanordnung 10 auch bei vollständig geöffnetem Ventilelement 6, was insbesondere dazu beiträgt, dass das Ventilelement 6 beim Schließen und damit beim wieder in Kontakt treten mit dem Gleitelement 11 nicht mit diesem verkantet bzw. verklemmt, sondern leichtgängig auf dieses aufgeschoben wird. Die Halteeinrichtung 13 kann dabei insbesondere im Gehäuse 2 eingeclipst bzw. angeklebt oder angespritzt werden, wobei selbstverständlich auch denkbar ist, dass der Dichtring 12 eine Nase 14 besitzt, welcher eine entsprechende Hinterschnittkontur am Gehäuse 2 hintergreift und dadurch die Dichtungsanordnung 10 selbstständig am Gehäuse 2 fixiert, sofern der Dichtring 12 fest mit dem Gleitring 11 verbunden ist.

Im Bereich des Ventilelementes 6 kann an zumindest einer Stelle zusätzlich eine Abflachung 15 in der Art einer Sammeltasche vorgesehen sein, wobei die Abflachung außerhalb des Dichtsitzes, das heißt eines Kontaktbereichs zwischen Gleitring 11 und Ventilelement 6 angeordnet ist. Eine derartige Abflachung 15 kann ebenfalls zur Vorsteuerung verwendet werden oder aber zum Sammeln von beispielsweise abrasiven Sandkörnern, die dann beim Öffnen des Ventilelementes 6 vergleichsweise schnell weggespült und damit ausgetragen werden und sich insbesondere nicht zwischen das Ventilelement 6 und den Gleitring 11 einschieben und dadurch auf lange Sicht gesehen den Gleitring 11 beschädigen. Derartige Abflachungen 15 können insbesondere auch ein schnelles Öffnen des Ventilelementes 6 begünstigen, wodurch beispielsweise eine Druckverlustminderung einhergeht. Derartige Abflachungen 15 können auch dazu beitragen, dass ein Reibkontakt zwischen dem Ventilelement 6 einerseits und dem Gleitring 11 andererseits vergleichsweise kurz gehalten wird, wodurch ein Verdrehen des Ventilelements 6 und damit ein Öffnen und Schließen des Thermostatventils 1 leichtgängig ist, da die Reibung zwischen Gleitring 11 und Ventilelement 6 deutlich reduziert wird. Die Abflachung 15 ist vorzugsweise in einem Dichtungsbereich des Ventilelements 6 angeordnet, also innerhalb des durch den Gleitring 11 gebildeten Kreises.

Ebenso vorgesehen ist ein das Ventilelement 6 bewegender Hebelmechanismus 16 (vgl. insbesondere Fig. 3), der erfindungsgemäß ein Kniehebelmechanismus ist, , über den das Ventilelement 6 ausschließlich in seiner dichtenden Endlage am Gleitring 11 anliegt, bei einem Öffnen oder Schließen jedoch zunächst vom Gleitring 11 abhebt, bzw. auf diesen aufgesetzt wird. Hierdurch ist ebenfalls ein reibungsarmes Verstellen bzw. Verdrehen des Ventilelements 6 möglich, da dieses ausschließlich in seiner dichtenden Endstellung in Kontakt mit dem Gleitring 11 tritt. Generell sind sämtliche Außenkonturen des Ventilelements 6 mit sanften Übergängen ausgestattet, wodurch sich ein leichtes Verstellen und insbesondere auch ein besseres Schließverhalten ergibt. Denkbar ist insbesondere eine anlaufende Kontur 17 bzw. Fase 25, die rund ausgestaltet ist und die sich beim Schließen des Ventilelements 6 leichtgängig unter den Gleitring 11 schiebt.

Des Weiteren kann am Ventilelement 6 und/oder am Gehäuse 2, gemäß der Fig. 1 am Gehäuse 2, ein Leitelement 18 zur Durchmischung des durch das Thermostatventil 1 fließenden Fluids oder aber auch zur Strömungslenkung vorgesehen sein. Ein derartiges Leitelement 18 kann beispielsweise eine Strömungszuführung an einem Temperaturfühler bewirken, welcher wiederum mit einem Stellantrieb zum Verstellen des Ventilelements 6 verbunden ist. Generell kann das Leitelement 18 aber selbstverständlich auch lediglich eine optimale Durchmischung des Fluids bewirken.

Mit dem erfindungsgemäßen Ventilelement 6 mit der lediglich einen einzigen Öffnung 8, lässt sich dieses fertigungstechnisch einfach, kostengünstig und zugleich mit hoher Qualität fertigen, wodurch auch eine vergleichsweise kostengünstige und qualitativ hochwertige Fertigung des Thermostatventils 1 ermöglicht wird.

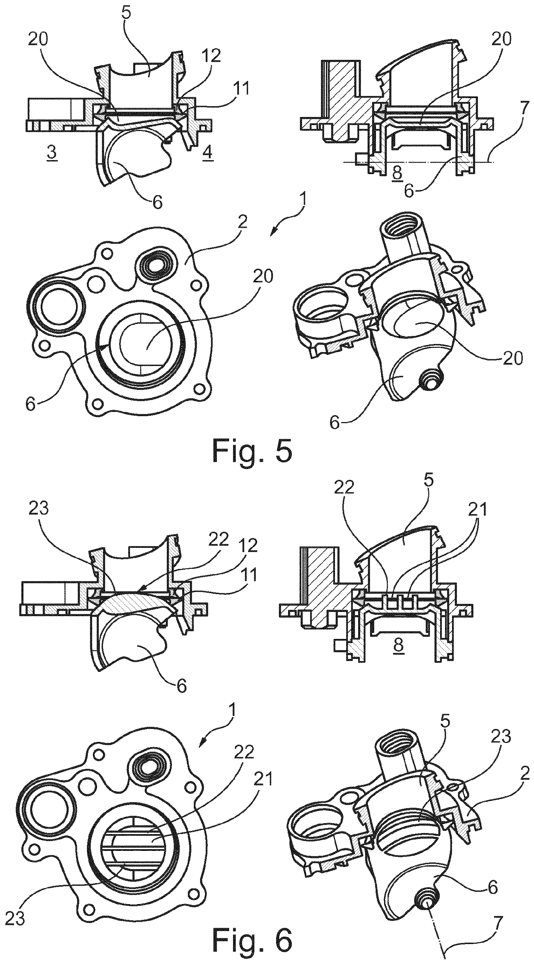

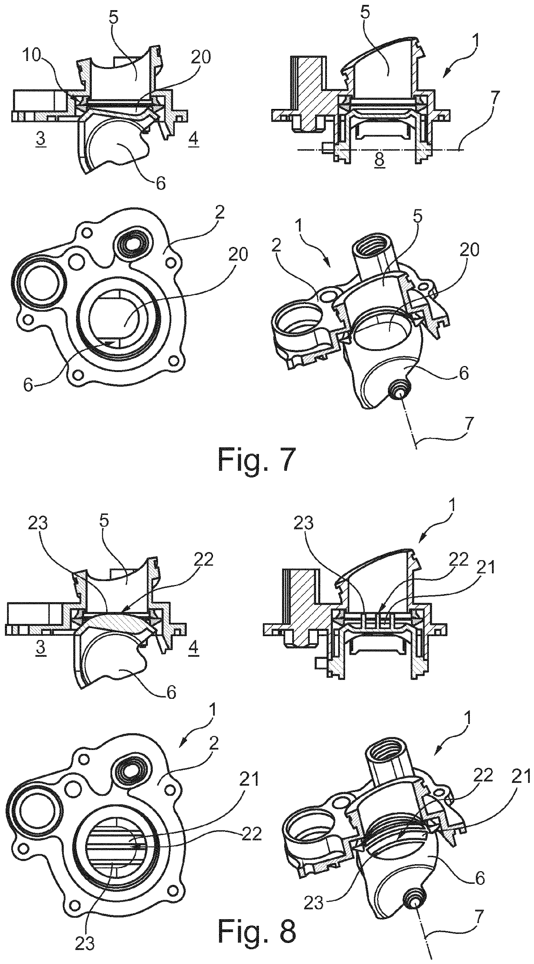

Die zuvor im Allgemeinen beschriebenen Merkmale gelten auch für die nachfolgend beschriebenen Thermostatventile 1. Dabei zeigt Fig.4 ein erfindungsgemäßes Thermostatventil 1 in verschiedenen Ansichten und Schnitten mit einem abgeflachten Ventilelement 6, wobei die Abflachung 19 plattenartig und insbesondere eben ausgebildet ist. In Fig. 5 ist ein erfindungsgemäßes Thermostatventil 1 mit Strömungsvertiefungen/-führungen 20 im Ventilelement 6 dargestellt, ähnlich wie in Fig. 7, hier jedoch mit anders ausgerichteten Strömungsvertiefungen/Strömungsführungen 20. Die unterschiedliche Ausrichtung bewirkt insbesondere ein unterschiedliches Öffnungsverhalten am Maschinenanschluss 3 bzw. am Bypass-Anschluss 4.

Fig. 6 zeigt ein erfindungsgemäßes Thermostatventil 1 in verschiedenen Ansichten und Schnitten mit Taschen 21 für die Strömung und mit einer Führung 22 für das Ventilelement 6. Die Führung 22 besitzt dabei mehrere Führungsrippen 23. Eine vergleichbare Darstellung zeigt Fig. 8, jedoch mit anders ausgerichteten Taschen 21 und Führungsrippen 23.

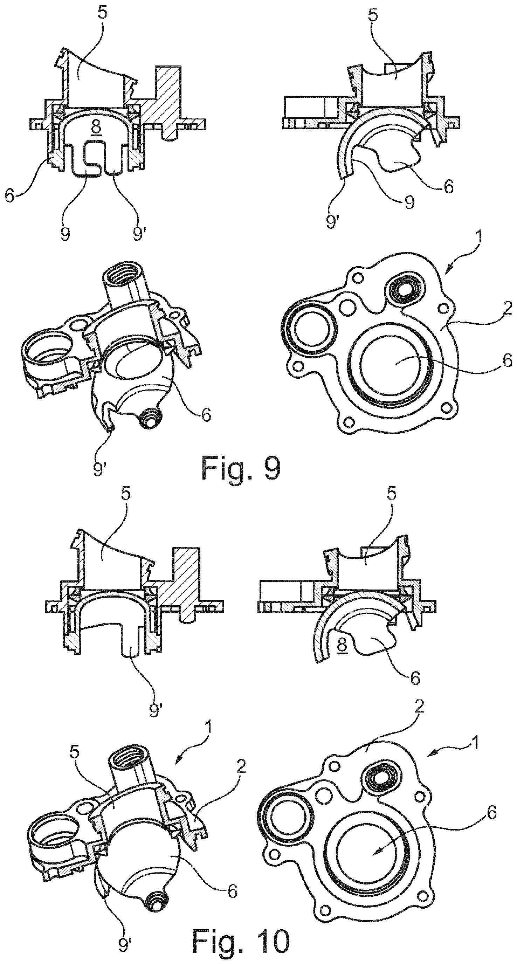

Fig. 9 zeigt ein erfindungsgemäßes Thermostatventil 1 in verschiedenen Ansichten und Schnitten mit einem Ventilelement 6 mit zwei Zungenelementen 9,9', wobei das Zungenelement 9 aufgrund seiner Abwinklung am freien Ende eine Offen-geschlossen-offen Stellung ermöglicht, wogegen das Zungenelement 9' lediglich eine Offen-geschlossen Stellung vorsieht.

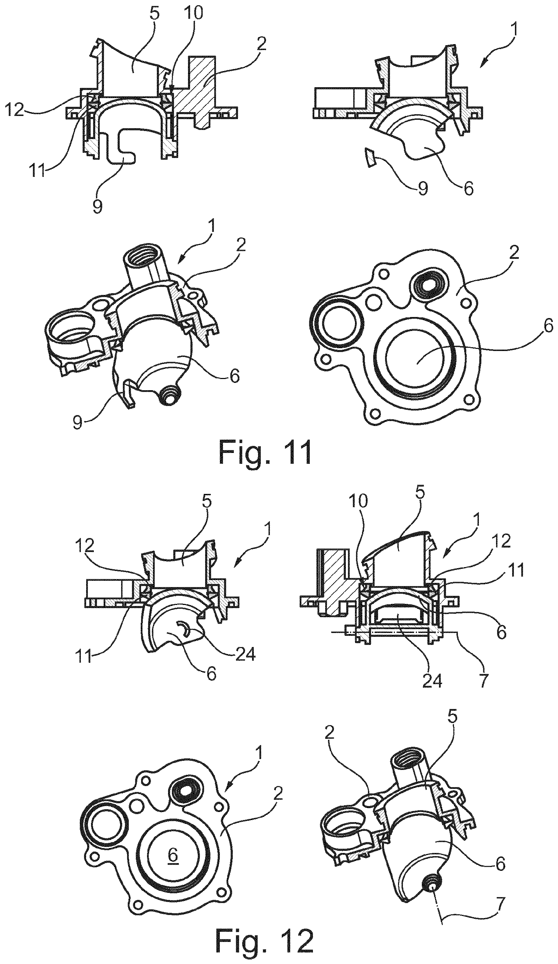

In Fig. 10 ist ein Ventilelement 6 gezeigt mit nur einem einzigen Zungenelement 9', welches keine Abwinklung aufweist und welches somit ausschließlich eine Offen-geschlossen Stellung ermöglicht. In Fig. 11 besitzt das Ventilelement 6 ebenfalls nur ein einziges Zungenelement 9, diesmal aber ein abgewinkeltes, so dass hiermit eine Offen-geschlossen-offen Stellung ermöglicht wird.

Fig. 12 zeigt ein erfindungsgemäßes Thermostatventil 1 in verschiedenen Ansichten und Schnitten mit einem Ventilelement 6 mit einer Leitstruktur 24 an der Innenseite des Ventilelements 6, die in der Art eines Strömungsleitelements wirkt und daher eine gerichtete Strömung erzeugen kann.

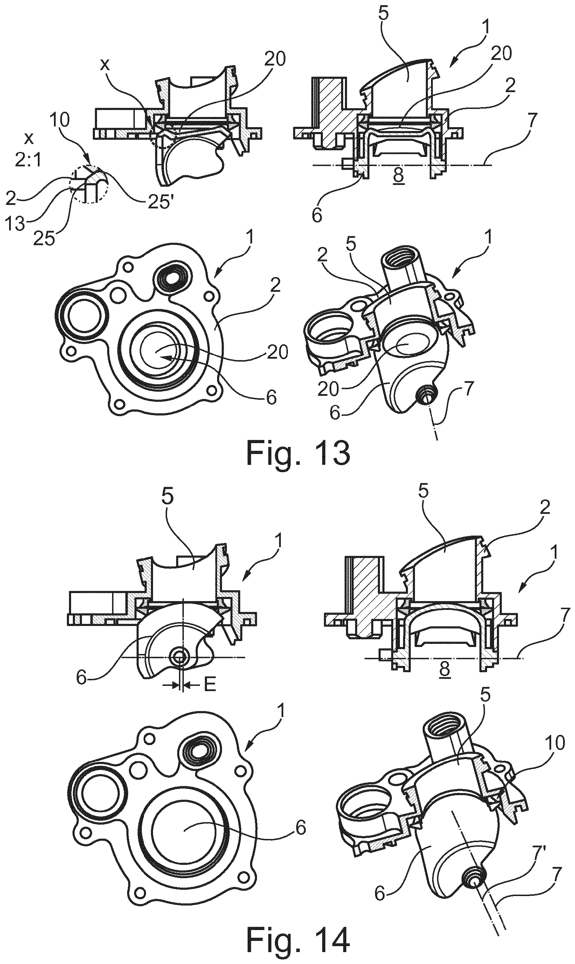

Fig. 13 zeigt ein Thermostatventil 1 in verschiedenen Ansichten und Schnitten mit einem Ventilelement 6 mit einer Fase 25 und 25', die insbesondere ein leichteres Verdrehen des Ventilelements 6 ermöglicht. Die Fasen 25 und 25' besitzt einen Radius von 0,5 bis 3 mm, vorzugsweise von 2 mm und ermöglicht damit ein sanftes An-/Unterlaufen des Ventilelements 6 an das Gehäuse 2 bzw. eine dort angeordnete und nicht näher bezeichnete Dichtungsanordnung 10. Somit kommt es bei der Bewegung des Ventilelements 6 relativ zur Dichtungsanordnung 10 nicht zum Verkanten. Dies passiert bei nicht abgerundeten Kanten oft und trägt zu einem signifikanten Verschleiß bei. Die Fasen 25 +25' führen damit zu einem vorteilhaften, langlebigen, verschleiß- und reibungsarmen Betriebsverhalten.

Schließlich ist in Fig. 14 ein Thermostatventil 1 in verschiedenen Ansichten und Schnitten mit einem exzentrisch gelagerten Ventilelement 6 dargestellt. Die Exzentrizität E bewirkt dabei, dass beim Drehen des Ventilelements 6 um seine exzentrisch gelagerte Drehachse 7' (in dieser exemplarischen Ansicht in Fig. 14 im Uhrzeigersinn) ein sich mit steigendem Verdrehwinkel größer werdender Spalt zwischen der Dichtfläche des Ventilelements 6 und der Dichtungsanordnung 10 ausbildet. Dieser Spalt bewirkt eine geringere Verstellkraft sowie ein Ausspülen von Feststoffen, die sich im geschlossenen Zustand im Bereich der Dichtungsanordnung 10 angesammelt haben. Dadurch wird ein leichtes, reibungs- und verschleißarmes Verdrehen des Ventilelements 6 ermöglicht. Die bisherige Drehachse 7 ist lediglich der Vollständigkeit halber eingezeichnet, um die Exzentrizität E zu verdeutlichen.

## Patentansprüche

1. Thermostatventil (1) für eine Brennkraftmaschine, mit einem Gehäuse (2), das mindestens drei Anschlüsse (3,4,5) aufweist, nämlich einen Maschinenanschluss (3) zur Verbindung mit einem Maschinenkühlsystem, einem Kühleranschluss (5) zur Verbindung mit einem Kühler und einem Bypass-Anschluss (4) zur Verbindung mit einem Bypass, einem hohlen kugelförmigen Ventilelement (6), das um eine Drehachse (7) im Gehäuse (2) zwischen zwei Endstellungen drehbar gelagert ist, wobei das Ventilelement (6) kugelsegment- oder kugelschalenförmig ausgebildet ist und ausschließlich eine einzige Öffnung (8) aufweist,
**dadurch gekennzeichnet,**
- **dass** eine an die Kugelform angepasste Dichtungsanordnung (10) vorgesehen ist, die einen Gleitring (11) aus gleitfähigem Kunststoff, insbesondere aus Polytetrafluorethylen, aufweist, der von einem elastomeren Dichtring (12) gegen das Ventilelement (6) vorgespannt ist,
- **dass** ein das Ventilelement (6) bewegender Kniehebelmechanismus als Hebelmechanismus (16) vorgesehen ist, über den das Ventilelement (6) ausschließlich in seiner dichtenden Endlage am Gleitring (11) anliegt, bei einem Öffnen oder Schließen jedoch zunächst vom Gleitring (11) abhebt bzw. auf diesen aufgesetzt wird.

2. Thermostatventil nach Anspruch 1,
**dadurch gekennzeichnet,**
**dass** eine Halteeinrichtung (13) zur Halterung des Gleitrings (11) vorgesehen ist, die den Gleitring (11) an zumindest zwei Stellen hält.

3. Thermostatventil nach Anspruch 2,
**dadurch gekennzeichnet,**
**dass** die Halteeinrichtung (13) als Haltering ausgebildet ist.

4. Thermostatventil nach einem der vorhergehenden Ansprüche,
**dadurch gekennzeichnet,**
**dass** das Ventilelement (6) an zumindest einer Stelle eine Abflachung (15) oder Vertiefung in der Art einer Sammeltasche für Hartstoffpartikel aufweist.

5. Thermostatventil nach Anspruch 4,
**dadurch gekennzeichnet,**
**dass** die Abflachung (15) innerhalb eines Dichtungsbereichs des Ventilelements (6) angeordnet ist.

6. Thermostatventil nach einem der Ansprüche 1 bis 5,
**dadurch gekennzeichnet,**
**dass** das Ventilelement (6) zumindest ein Zungenelement (9,9') zur Durchflusssteuerung eines Nebenkanals aufweist.

7. Thermostatventil nach einem der Ansprüche 1 bis 7,
**dadurch gekennzeichnet,**
**dass** am Ventilelement (6) und/oder am Gehäuse (2) zumindest ein Leitelement (18) zur Durchmischung des durch das Thermostatventil (1) fließenden Fluids oder zur Strömungslenkung vorgesehen ist.

8. Verwendung eines Thermostatventils (1) nach einem der Ansprüche 1 bis 9 in einem Kraftfahrzeug mit einem Verbrennungsmotor, insbesondere in einem Kühlkreislauf.

9. Kugelsegment- oder kugelschalenförmig ausgebildetes Ventilelement (6) mit ausschließlich einer einzigen Öffnung (8), für ein Ventil, insbesondere für ein Thermostatventil (1) nach einem der Ansprüche 1 bis 7.

## Claims

1. Thermostatic valve (1) for an internal combustion engine, having a housing (2) which has at least three connections (3,4,5), namely an engine connection (3) for connection to an engine cooling system, a cooler connection (5) for connection to a cooler and a bypass connection (4) for connection to a bypass, a hollow spherical valve element (6) which is rotatably mounted about an axis of rotation (7) in the housing (2) between two end positions, wherein the valve element (6) is spherical segment-shaped or spherical shell-shaped and has only one single opening (8),
**characterised in that**
- a sealing arrangement (10) adapted to the spherical shape is provided which has a sliding ring (11) made of slidable plastic, in particular polytetrafluoroethylene, which is pre-stressed against the valve element (6) by an elastomeric sealing ring (12),
- a toggle lever mechanism which moves the valve element (6) is provided as a lever mechanism (16), via which the valve element (6) bears against the sliding ring (11) only in its sealing end position, but is first lifted off by the sliding ring (11) or placed thereon during an opening or closing operation.

2. Thermostatic valve according to claim 1,
**characterised in that**
a holding device (13) for holding the sliding ring (11) is provided which holds the sliding ring (11) at at least two points.

3. Thermostatic valve according to claim 2,
**characterised in that**
the holding device (13) is designed as a holding ring.

4. Thermostatic valve according to any of the preceding claims,
**characterised in that**
the valve element (6) has, at at least one point, a flattening (15) or depression in the manner of a collection bag for hard material particles.

5. Thermostatic valve according to claim 4,
**characterised in that**
the flattening (15) is arranged within a sealing region of the valve element (6).

6. Thermostatic valve according to any of claims 1 to 5,
**characterised in that**
the valve element (6) has at least one tongue element (9,9') for controlling the flow of a secondary channel.

7. Thermostatic valve according to any of claims 1 to 7,
**characterised in that**,
on the valve element (6) and/or on the housing (2), at least one guide element (18) is provided for mixing the fluid flowing through the thermostatic valve (1) or for current direction.

8. Use of a thermostatic valve (1) according to any of claims 1 to 9 in a motor vehicle having a combustion engine, in particular in a cooling circuit.

9. Spherical segment-shaped or spherical shell-shaped valve element (6) having only one single opening (8), for a valve, in particular for a thermostatic valve (1) according to any of claims 1 to 7.

## Revendications

1. Vanne thermostatique (1) pour un moteur à combustion interne, avec un boîtier (2) qui présente au moins trois raccords (3,4,5), à savoir un raccord de moteur (3) en vue d'une liaison avec un système de refroidissement de moteur, un raccord de refroidisseur (5) en vue d'une liaison avec un refroidisseur et un raccord de dérivation (4) en vue d'une liaison avec une dérivation, un élément formant vanne (6) sphérique creux qui est monté rotatif autour d'un axe de rotation (7) dans le boîtier (2) entre deux positions terminales, dans laquelle l'élément formant vanne (6) est réalisé en forme de segment sphérique ou de coque sphérique et présente essentiellement une seule ouverture (8),
**caractérisée en ce que**
- un agencement d'étanchéité (10) adapté à la forme sphérique est prévu, lequel présente un anneau coulissant (11) en matière plastique à pouvoir lubrifiant, en particulier en polytétrafluoroéthylène, qui est contrainte contre l'élément formant vanne (6) par un anneau étanche élastomère (12),
- un mécanisme à genouillère mettant en mouvement l'élément formant vanne (6) est prévu en tant que mécanisme à levier (16), par l'intermédiaire duquel l'élément formant vanne (6), essentiellement dans sa position terminale créatrice d'étanchéité, est en contact avec l'anneau coulissant (11), bien qu'il soit initialement soulevé par rapport à l'anneau coulissant (11) ou mis en place sur celle-ci lors d'une ouverture ou d'une fermeture.

2. Vanne thermostatique selon la revendication 1,
**caractérisée en ce que**
un dispositif de retenue (13) qui retient l'anneau coulissant (11) en au moins deux endroits est prévu en vue d'une retenue de l'anneau coulissant (11).

3. Vanne thermostatique selon la revendication 2,
**caractérisée en ce que**
le dispositif de retenue (13) est réalisé sous la forme d'un anneau de retenue.

4. Vanne thermostatique selon l'une quelconque des revendications précédentes,
**caractérisée en ce que**
l'élément formant vanne (6) présente en au moins un endroit un aplatissement (15) ou une dépression à la manière d'un compartiment collecteur pour des particules de matériau à résistance mécanique élevée.

5. Vanne thermostatique selon la revendication 4,
**caractérisée en ce que**
l'aplatissement (15) est agencé au sein d'une région d'étanchéité de l'élément formant vanne (6).

6. Vanne thermostatique selon l'une quelconque des revendications 1 à 5,
**caractérisée en ce que**
l'élément formant vanne (6) présente au moins un élément formant languette (9,9') en vue d'une commande de débit d'un canal secondaire.

7. Vanne thermostatique selon l'une quelconque des revendications 1 à 7,
**caractérisée en ce que**
au moins un élément de guidage (18) est prévu au niveau de l'élément formant vanne (6) et/ou du boîtier (2) en vue d'un brassage du fluide circulant à travers la vanne thermostatique (1) ou d'un guidage de l'écoulement.

8. Utilisation d'une vanne thermostatique (1) selon l'une quelconque des revendications 1 à 9 dans un véhicule automobile à moteur à combustion interne, en particulier dans un circuit de refroidissement.

9. Elément formant vanne (6) réalisé en forme de segment sphérique ou de coque sphérique avec essentiellement une seule ouverture (8), pour une vanne, en particulier pour une vanne thermostatique (1) selon l'une quelconque des revendications 1 à 7.
